Europäisches Patentamt

European Patent Office

Office européen des brevets

(11) Veröffentlichungsnummer: **0 229 364 B1**

# (12) EUROPÄISCHE PATENTSCHRIFT

(45) Veröffentlichungstag der Patentschrift: **27.02.91**

(51) Int. Cl.⁵: **H04M 1/02, H04M 1/23**

(21) Anmeldenummer: **86117785.5**

(22) Anmeldetag: **19.12.86**

(54) Telefonapparat.

(30) Priorität: **14.01.86 DE 3600835**

(43) Veröffentlichungstag der Anmeldung:
**22.07.87 Patentblatt 87/30**

(45) Bekanntmachung des Hinweises auf die
Patenterteilung:
**27.02.91 Patentblatt 91/09**

(84) Benannte Vertragsstaaten:
**AT CH FR GB IT LI NL**

(56) Entgegenhaltungen:
**EP-A- 0 049 332**
**DE-C- 804 579**
**GB-A- 2 131 746**

**CHIP, Nr. 6, Juni 1980, Seiten 22-23, Würz-burg, DE; K.P. LINDLAR: "Das Telefon der Zukunft"**

(73) Patentinhaber: **PORSCHE DESIGN GMBH**
**Flugplatzstrasse 29**
**A-5700 Zell am See(AT)**

(72) Erfinder: **Tragatschnig, Jörg**
**Erlhofstrasse 2/2a**
**A-5700 Zell am See-Thumersbach(AT)**

(74) Vertreter: **Patentanwälte Kirschner & Grosse**
**Forstenrieder Allee 59**
**D-8000 München 71(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Telefonapparat mit einem einen Tastenblock aufweisenden Gehäuse.

Bei den bisher üblichen Telefonapparaten ist wenigstens der Teil der Deckfläche des Gehäuses, der den Tastenblock enthält, eben ausgebildet und zur Vorderseite des Telefonapparates geneigt angeordnet. Der Tastenblock hat ebenfalls eine ebene Oberfläche mit einer entsprechenden Neigung, wodurch das Erkennen der Bezeichnungen der Nummerntasten und deren Bedienung erleichtert sein sollen. Dies trifft jedoch nur für den Fall zu, daß sich die Bedienungsperson direkt vor dem Telefonapparat befindet, so daß der geneigte Gehäuseabschnitt mit dem Tastenblock der Bedienungsperson direkt zugewandt ist. Aus einer seitlichen oder gar rückwärtigen Position heraus ist die Handhabung eines derartigen Telefonapparates, insbesondere das Betätigen der gewünschten Nummerntasten, jedoch sehr schwierig, so daß es erforderlich ist, den Telefonapparat jeweils in die der Bedienungsperson zugewandte Position zu bewegen.

Der Erfindung liegt die Aufgabe zugrunde, einen Telefonapparat der betrachteten Art so weiter zu bilden, daß dieser von allen Seiten bequem und sicher gehandhabt werden kann, ohne daß der Telefonapparat hierzu in eine der Bedienungsperson zugewandte Stellung gedreht werden muß.

Diese Aufgabe wird erfindungsgemäß dadurch gelöst, daß das Gehäuse einen im Grundriß kreisförmigen, drehbar gehaltenen, den Tastenblock enthaltenden Gehäuseabschnitt aufweist, und daß das Gehäuse mit dem Gehäuseabschnitt und dem Tastenblock im wesentlichen die Form einer Kugelkalotte hat.

Der Tastenblock hat hiermit keine ebene Deckfläche mehr, sondern die einzelnen Nummerntasten bilden im wesentlichen Abschnitte einer Kugelkalotte, wobei sie mit der Deckfläche des Gehäuses fluchten. Da der Tastenblock in einem drehbar in dem übrigen Gehäuse angeordneten Gehäuseabschnitt angeordnet ist, kann der Tastenblock auf einfache und bequeme Weise so gedreht werden, daß er in etwa der Bedienungsperson zugewandt ist, womit es sich erübrigt, den gesamten Telefonapparat zu verschieben oder zu verdrehen. Die Bedienung des erfindungsgemäßen Telefonapparates ist durch diese Ausbildung erheblich vereinfachte, wobei als weiterer Vorteil hinzukommt, daß der Telefonapparat durch seine besondere Formgebung höchsten ästhetischen Anforderungen genügt.

Mit großem Vorteil ist vorgesehen, daß der drehbare Gehäuseabschnitt konzentrisch zu dem Gehäuse angeordnet ist. Diese Ausbildung hat den Vorteil, daß der drehbar angeordnete Tastenblock nach allen Seiten gleich gut sichtbar ist. Ein besonders günstiger Sichtwinkel ergibt sich dann, wenn nach einem weiteren Vorschlag der Erfindung der Tastenblock derart außermittig in dem drehbaren Gehäuseabschnitt angeordnet ist, daß seine der Ausrichtung der Bezeichnung seiner Nummerntasten entsprechende Mittelachse in radialer Richtung des drehbaren Gehäuseabschnitts verläuft. Diese Anordnung ist auch für den Fall vorteilhaft, daß der drehbare Gehäuseabschnitt außerdem eine Display-Anzeige aufweist, die an den Tastenblock angrenzt, da zum Erkennen dieser Anzeige ein bestimmter Blickwinkel erforderlich ist.

Die elektrische Verbindung zwischen den drehbar gelagerten Elementen und einer im Bodenbereich des Gehäuses angeordneten Leiterplatte sollte durch flexible Kabel gebildet sein wodurch auch auf Dauer eine leichte Drehbarkeit des den Tastenblock aufweisenden Gehäuseabschnitts gewährleistet ist, ohne daß hierdurch einzelne Kabel gelöst werden.

Mit großem Vorteil ist vorgesehen, daß der Tastenblock mit der Display-Anzeige lösbar in den drehbaren Abschnitt eingesetzt ist. Durch diese Ausbildung ist der erfindungsgemäße Telefonapparat sowohl als Tischtelefon als auch als Wandtelefon verwendbar, wozu es lediglich erforderlich ist, den Tastenblock mit der Display-Anzeige um $180°$ verdreht in die zugehörige Aussparung in dem drehbaren Gehäuseabschnitt einzusetzen. Infolge der Kugelkalotten-Form des Gehäuses und des Tastenblocks bietet der in einer geeigneten Höhe an einer vertikalen Fläche befestigte Telefonapparat mit dem um $180°$ gedrehten Gehäuseabschnitt und dem entsprechend um $180°$ verdreht eingesetzten Tastenblock der Bedienungsperson einen günstigen Blick- und Bedienungswinkel auf die Nummerntasten.

Zweckmäßigerweise ist der Drehbereich des Gehäuseabschnitts begrenzt, damit die elektrische Verbindung zwischen den drehbar gelagerten Bedienungselementen und der Leiterplatte nicht beeinträchtigt wird. Dabei kann der Drehbereich des Gehäuseabschnitts auf $210°$ begrenzt sein, wobei zur Drehsicherung Anschläge vorgesehen sein können. Außerdem kann die drehbare Halterung so ausgestaltet sein, daß der Gehäuseabschnitt jeweils in Teilschritten von beispielsweise $5°$ leicht lösbar einrastet.

Damit die Grundfläche des Telefonapparates nicht zu groß wird, wird vorgeschlagen, daß das Gehäuse eine rechteckige Bodenfläche und vertikal verlaufende Seitenwände aufweist. Dadurch erhalten die Seitenwände die Form von Kreissegmenten, womit der erfindungsgemäße Telefonapparat eine besonders formschöne Gestaltung erfährt.

Nach einem weiteren Vorschlag der Erfindung sind im Bereich zweier benachbarter Ecken des Gehäuses muldenförmige Vertiefungen zur Aufnahme des Hörteils und des Sprechteils des Telefonhörers ausgebildet. Der das Hörteil und das Sprechteil verbinde Mittelabschnitt des Telefonhörers kann sphärisch gekrümmt sein, wobei die Innenfläche des Mittelabschnitts an dem Gehäuse anliegt. Damit entspricht der Krümmungsradius des Telefonhörers dem Kalottenradius des Gehäuses, wodurch Telefonhörer und Gehäuse ein harmonisches Ganzes bilden.

Mit großem Vorteil wird vorgeschlagen, daß in dem Gehäuse im Anlagebereich des Mittelabschnitts des Telefonhörers zwei Magnete angeordnet sind und daß der Mittelabschnitt an entsprechenden Stellen mit Bauteilen insbesondere aus einem ferromagnetischen Material versehen ist. Diese Maßnahme dient der sicheren Halterung des aufruhenden Telefonhörers, der damit auch bei einer Verwendung als Wandtelefon sicher an dem Gehäuse gehalten ist.

Gemäß der Erfindung wird ferner vorgeschlagen, den Mittelabschnitt des Telefonhörers mit einer Klappe zu versehen, an deren Innenseite ein Telefonnummern-Register angebracht ist. Mit dieser besonders vorteilhaften Ausgestaltung des erfindungsgemäßen Telefonapparates sind. die wichtigsten Rufnummern stets zur Hand und sofort verfügbar.

Die Klappe kann durch einen Druckknopf-Mechanismus aus ihrer Raststellung freigegeben werden, wobei dann der Druckknopf und eine ebenfalls an dem Hörer angeordnete Taste für Mikrophonabschaltung, die den Magneten zugeordneten Bauteile bilden können, die zusammen mit den Magneten den aufruhenden Hörer an dem Gehäuse halten. Eine Lauthöreinrichtung kann dabei an dem drehbaren Gehäuseabschnitt befestigt sein.

Die Klappe kann alternativ hierzu im Abstand zu einer schmalseitigen Randkante verschwenkbar gelagert sein und durch leichten Druck auf den über die Lagerachse vorstehenden Randabschnitt aus ihrer geschlossenen Raststellung freigegeben werden. Das Öffnen der Klappe ist dabei eine besonders einfache Maßnahme, die noch weiter vereinfacht wird, wenn die Klappe von einer Feder in Öffnungsrichtung beaufschlagt ist. Damit springt die Klappe von selbst in die Öffnungsstellung, wenn sie durch leichten Druck aus ihrer Raststellung freigegeben ist.

Zweckmäßigerweise sind an der Unterseite der Bodenwand des Gehäuses von den Seitenkanten zu dem mittleren Bereich führende Nuten zur Aufnahme des Hörerkabels und des Telefonanschlußkabels ausgebildet, wobei die Kabel durch Durchgangsbohrungen im mittleren Bereich des Bodens ins Innere des Gehäuses verlaufen, so daß die Kabel in den Nuten für einen Links- bzw. Rechtsbetrieb austauschbar sind.

Nach einem weiteren Vorschlag der Erfindung können die Tasten des Tastenblocks Griffmulden enthalten, wobei die Bezeichnungen der Tasten außerhalb der Mulden angebracht sind, so daß diese Bezeichnungen während der Betätigung der Tasten sichtbar bleiben und gegen vorzeitige Abnutzung der Bedruckung geschützt sind. Darüberhinaus ist die Bedruckung selbst technisch leichter auf einer ebenen Fläche herzustellen als auf einer konkav gewölbten Fläche.

Weitere Merkmale, Vorteile und Einzelheiten der Erfindung ergeben sich aus der nachfolgenden Beschreibung einer bevorzugten Ausführungsform sowie anhand der Zeichnung. Dabei zeigen:

| | |
|---|---|
| Fig. 1 | eine Aufsicht auf den erfindungsgemäßen Telefonapparat; |
| Fig. 2 bis 5 | eine Rückansicht, eine Seitenansicht, eine Vorderansicht sowie eine Ansicht von unten des Telefonapparats gemäß Fig. 1; |
| Fig. 6 | eine perspektivische Ansicht des Telefonapparates und |
| Fig. 7 | einen Querschnitt durch den Telefonapparat entlang einer Linie VII-VII in Fig. 6. |

Der in den Figuren dargestellte Telefonapparat hat ein Gehäuse 1 mit einem konzentrisch angeordneten drehbaren Gehäuseabschnitt 2, der im Grundriß eine Kreisform hat und einen Kalottenabschnitt des Gehäuses bildet. In den Gehäuseabschnitt 2 ist ein Tastenblock 3 mit Nummerntasten 4 eingesetzt, sowie eine Display-Anzeige 5, die zusammen mit dem Tastenblock 3 bei Verwendung des Telefonapparates als Wandtelefon um 180° verdreht in den Gehäuseabschnitt 2 eingesetzt werden kann.

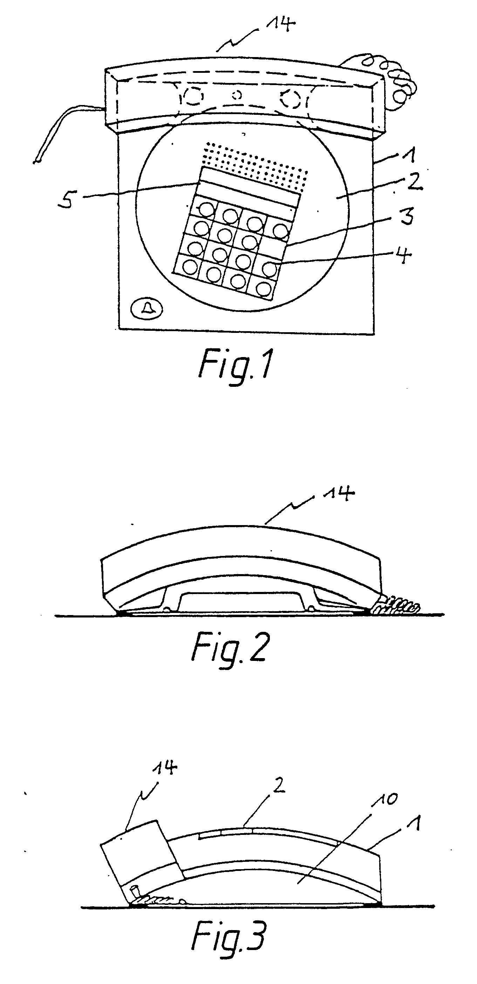

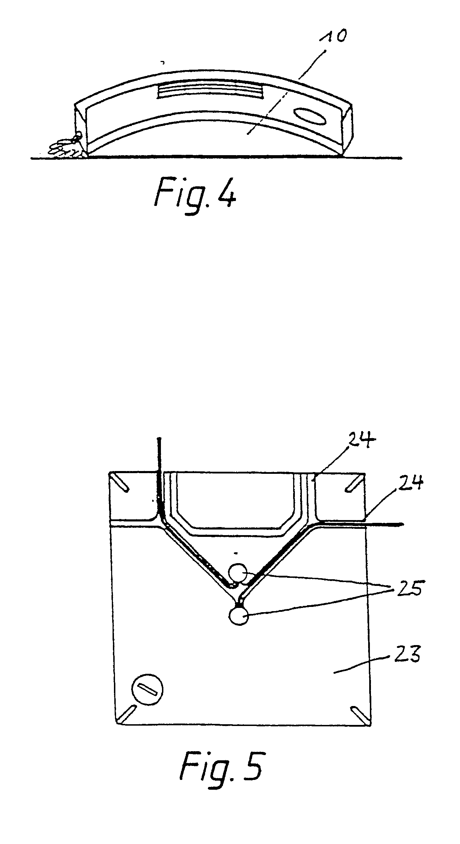

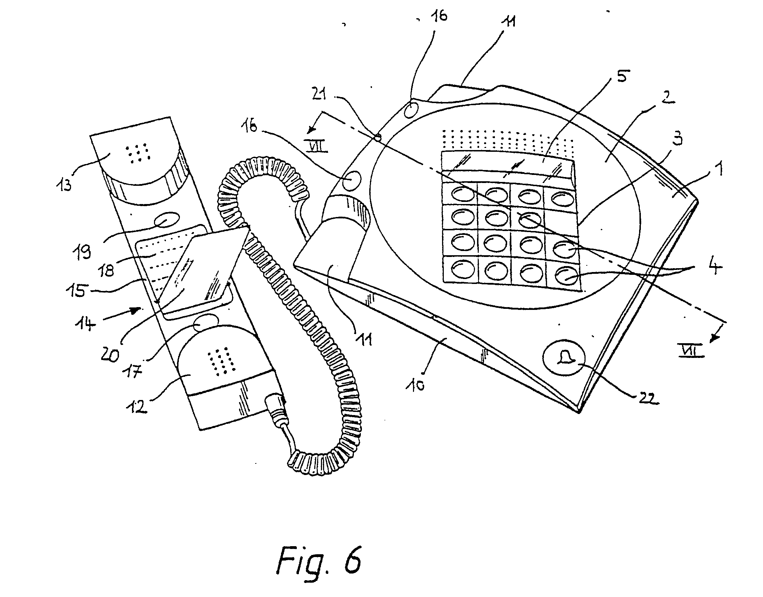

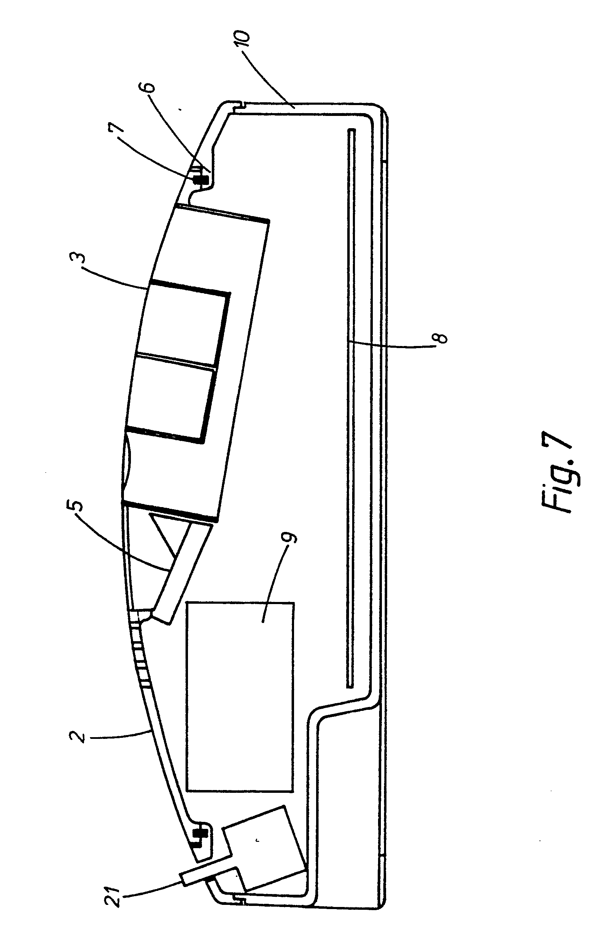

Aus Fig. 7 ist zu ersehen, daß der drehbare Gehäuseabschnitt 2 auf Vorsprüngen 6 des Gehäuses 1 aufruht, wobei eine um-laufende Gleitdichtung 7 das Eintreten von Fremdpartikeln ins Innere des Gehäuses 1 verhindert. Im Bodenbereich des Gehäuses 1 ist eine Leiterplatte 8 angeordnet, die mit nicht dargestellten flexiblen Kabeln mit den drehbar gelagerten Elementen, wie den Nummerntasten, 4 verbunden ist.

Ein Lautsprecher 9 ist ebenfalls an dem drehbaren Gehäuseabschnitt befestigt.

Das Gehäuse 1 hat eine quadratische Bodenfläche mit vertikal verlaufenden Seitenwänden 10, die die Form von Kreissegmenten haben. Im Bereich zweier benachbarter Ecken des Gehäuses 1 sind muldenförmige Vertiefungen 11 ausgebildet, die zur Aufnahme des Hörteils 12 und des Sprechteils 13 des Telefonhörers 14 bestimmt sind. Der Mittelabschnitt 15 des Telefonhörers 14 ist in der Weise sphärisch gekrümmt, daß er an dem entsprechenden Abschnitt des Gehäuses 1 anliegen kann.

Zum Zwecke der sicheren Befestigung des Telefonhörers 14 auf bzw. an dem Gehäuse 1 sind 2 Magnete 16 in das Gehäuse 1 eingelassen, die mit an entsprechenden Stellen des Mittel-abschnitts 15 des Telefonhörers 14 vorgesehenen ferromagnetischen Bauteilen, nämlich einem Druckknopf 17 für ein Telefonnummern-Register 18 und einer Mikropgonabschalttaste 19 zusammenwirken (Fig.6).

Das Telefonnummern-Register 18 ist an der Innenseite einer schwenkbar gelagerten Klappe 20 angebracht, die aus ihrer Verschlußstellung durch Betätigung des Druckknopfes 17 freigegeben werden kann. Die Klappe 20 ist durch eine nicht dargestellte Feder in Öffnungsrichtung beaufschlagt.

Im Anlagebereich des Mittelabschnitts 15 des Telefonhörers 14 ist ferner ein Gabelumschalter 21 in dem Gehäuse 1 angeordnet. Im Bereich einer dem Telefonhörer 14 gegenüberliegenden Ecke des Gehäuses 14 ist ein Knopf 22 vorgesehen; der zur Signallautstärkenregelung bis zur Ruhe vor dem Telefon dient.

Aus Fig. 5 ist zu ersehen, daß an der Unterseite der Bodenwand 23 des Gehäuses 1 Nuten 24 ausgebildet sind, die im Mittelbereich der Bodenwand 23 ausgebildete Durchgangsbohrungen 25 mit Seitenkanten der Bodenwand verbinden. Diese Nuten bieten verschiedene Möglichkeiten, das Hörerkabel und das Telefonanschlußkabel von Seitenkanten des Gehäuses 1 zu den mittigen Durchgangsbohrungen 25 und von dort ins Innere des Gehäuses zu führen. Dadurch, daß die Deckfläche des Gehäuses 1 mit dem den Tastenblock 3 enthaltenden, drehbaren Gehäuseabschnitt 2 im wesentlichen die Form einer Kugelkalotte hat, läßt sich der Telefonapparat auch aus einer seitlichen oder rückwärtigen Position sicher und bequem bedienen, indem der drehbare Gehäuseabschnitt 2 mit dem Tastenblock 3 in eine Stellung verdreht wird, die der Bedienungsperson in etwa zugewandt ist.

## Ansprüche

1. Telefonapparat mit einem einen Tastenblock aufweisenden Gehäuse
**dadurch gekennzeichnet,**
daß das Gehäuse (1) einen im Grundriß kreisförmigen, drehbar gehaltenen, den Tastenblock (3) enthaltenden Gehäuseabschnitt (2) aufweist, und daß das Gehäuse (1) mit dem Gehäuseabschnitt (2) und dem Tastenblock (3) im wesentlichen die Form einer Kugelkalotte hat.

2. Telefonapparat nach Anspruch 1,
dadurch gekennzeichnet, daß der drehbare Gehäuseabschnitt (2) konzentrisch zu dem Gehäuse (1) angeordnet ist.

3. Telefonapparat nach Anspruch 1 oder 2, dadurch gekennzeichnet, daß die elektrische Verbindung zwischen den drehbar gelagerten Elementen (4, 5) und einer im Bodenbereich des Gehäuses (1) angeordneten Leiterplatte (8) durch flexible Kabel gebildet ist.

4. Telefonapparat nach einem der Ansprüche 1 bis 3, wobei der Tastenblock eine rechteckige Grundrißform hat, dadurch gekennzeichnet, daß der Tastenblock (3) derart außermittig in dem drehbaren Gehäuseabschnitt (2) angeordnet ist, daß seine der Ausrichtung der Bezeichnungen seiner Tasten (4) entsprechende Mittelachse in radialer Richtung des drehbaren Gehäuseabschnitts (2) verläuft.

5. Telefonapparat nach einem der Ansprüche 1 bis 4, dadurch gekennzeichnet, daß der drehbare Gehäuseabschnitt (2) ferner eine Display-Anzeige (5) aufweist, die an den Tastenblock (3) angrenzt.

6. Telefonapparat nach einem der Ansprüche 1 bis 5, dadurch gekennzeichnet, daß der Tastenblock (3) mit der Display-Anzeige (5) lösbar in den drehbaren Gehäuseabschnitt (2) eingesetzt ist.

7. Telefonapparat nach einem der Ansprüche 1 bis 6, dadurch gekennzeichnet, daß der Gehäuseabschnitt (2) um 210° drehbar ist, wobei dieser Drehbereich durch Anschläge begrenzt ist.

8. Telefonapparat nach Anspruch 7,
dadurch gekennzeichnet, daß der drehbare Gehäuseabschnitt(2) jeweils in Teilschritten von 5° leicht lösbar einrastet.

9. Telefonapparat nach einem der Ansprüche 1 bis 8, dadurch gekennzeichnet, daß das Gehäuse (1) eine rechteckige Bodenfläche und vertikal verlaufende Seitenwände (1) aufweist.

10. Telefonapparat nach Anspruch 9,
dadurch gekennzeichnet, daß im Bereich zweier benachbarter Ecken des Gehäuses (1) muldenförmige Vertiefungen (11) zur Aufnahme des Hörteils (12) und des Sprechteils (13) des Telefonhörers (14) ausgebildet sind.

11. Telefonapparat nach einem der Ansprüche 1 bis 10, dadurch gekennzeichnet, daß der das Hörteil (12) und das Sprechteil (13) verbinde-de Mittelabschnitt (15) des Telefonhörers (14) sphärisch gekrümmt ist, und daß die Innenfläche des Mittelabschnitts (15) an dem Gehäuse (1) anliegt.

12. Telefonapparat nach Anspruch 11, dadurch gekennzeichnet, daß in dem Gehäuse (1) im Anlagebereich des Mittelabschnitts (15) des Telefonhörers (14) zwei Magnete (16) angeordnet sind, und daß der Mittelab schnitt (15) an entsprechenden Stellen mit Bauteilen (17, 19) insbesondere aus einem ferromagnetischen Material versehen ist.

13. Telefonapparat nach einem der Ansprüche 1 bis 12, dadurch gekennzeichnet, daß der Mittelabschnitt (15) des Telefonhörers (14) mit einer Klappe (20) versehen ist, an deren Innenseite ein Telefonnummern-Register (18) angebracht ist.

14. Telefonapparat nach Anspruch 13, dadurch gekennzeichnet, daß die Klappe (20) im Abstand zu einer schmalseitigen Randkante verschwenkbar gelagert ist und durch leichten Druck auf den über die Lagerachse vorstehenden Randabschnitt aus ihrer geschlossenen Raststellung freigegeben wird.

15. Telefonapparat nach Anspruch 13 oder 14, dadurch gekennzeichnet, daß die Klappe (20) von einer Feder in Öffnungsrichtung beaufschlagt ist.

16. Telefonapparat nach einem der Ansprüche 11 bis 15, dadurch gekennzeichnet, daß die den Magneten (16) zugeordneten Bauteile eine Mikrophonabschalttaste (17) und ein Druckknopf (19) für das Telefonnummern-Register (18)- sind.

17. Telefonapparat nach einem der Ansprüche 1 bis 16, dadurch gekennzeichnet, daß eine Lauthöreinrichtung (9) an dem drehbaren Gehäuseabschnitt (2) befestigt ist.

18. Telefonapparat nach einem der Ansprüche 1 bis 17, dadurch gekennzeichnet, daß an der Unterseite der Bodenwand (23) des Gehäuses (1) von den Seitenkanten zu dem mittleren Bereich führende Nuten (24) zur Aufnahme des Hörerkabels und des Telefonanschlußkabels ausgebildet sind, wobei die Kabel durch Durchgangsbohrungen (25) im mittleren Bereich der Bodenwand (23) ins Innere des Gehäuses (1) verlaufen und daß die Kabel in den Nuten für Links- bzw. Rechtsbetrieb austauschbar sind.

19. Telefonapparat nach einem der Ansprüche 1 bis 18, dadurch gekennzeichnet, daß die Tasten (4) des Tastenblocks (3) Griffmulden enthalten und daß die Bezeichnungen der Tasten (4) außerhalb der Mulden angebracht sind.

## Claims

1. Telephone apparatus with a housing including a key block, **characterized in that** the housing (1) includes a housing portion (2) with circular plan, being rota-table and containing the key block (3), and that the housing (1) with the housing portion (2) and the key block (3) essentially has the shape of a spherical cup.

2. Telephone apparatus as defined in claim 1, **characterized in that** the rotatable housing portion (2) is arranged concentrically to the housing (1).

3. Telephone apparatus as defined in claim 1 or 2, **characterized in that** the electric connection between the rotatably supported members (4, 5) and a conductor plate (8) disposed in the bottom area of the housing (1) are formed by flexible cables.

4. Telephone apparatus as defined in one of claims 1 to 3, wherein the key block has a rectangular shape of plan, **characterized in that** the key block (3) is eccentrically arranged in the rotatable housing portion (2) such that the central axis, being central as to alignment of denominations of keys (4), runs in radial direction of the rotatable housing portion (2).

5. Telephone apparatus as defined in one of claims 1 to 4, **characterized in that** the rotatable housing portion (2) further comprises a display (5) adjacent to the key block (3).

6. Telephone apparatus as defined in one of claims 1 to 5, **characterized in that** the key block (3) with the display (5) is releasably inserted in the rotatable housing portion (2).

7. Telephone apparatus as defined in one of claims 1 to 6, **characterized in that** the housing portion (2) is rotatable by 210$^\circ$, this range of rotation being limited by stop members.

8. Telephone apparatus as defined in claim 7, **characterized in that** the rotatable housing portion (2) in partial steps of about 5$^\circ$ each locks releasably.

9. Telephone apparatus as defined in one of claims 1 to 8, **characterized in that** the housing (1) has a rectangular ground area and vertically extending side walls (1).

10. Telephone apparatus as defined in claim 9, **characterized in that** in the area of two neighbouring corners of the housing (1) cup-shaped recesses (11) are formed for receiving the earpiece (12) and the mounthpiece (13) of the receiver (14).

11. Telephone apparatus as defined in one of claims 1 to 10, **characterized in that** the central section (15) of the telephone receiver (14), connecting the earpiece (12) and the mouthpiece (13) is spherically curved and that the inner face of the central section (15) bears on the housing (1).

12. Telephone apparatus as defined in claim 11, **characterized in that** two magnets (16) are arranged in the housing (1) in the contact area of the central section (15) of the receiver (14) and that the central section (15) in corresponding positions is provided with structural members (17, 19) made from, in particular, ferromagnetic material.

13. Telephone apparatus as defined in one of claims 1 to 12, **characterized in that** the central section (15) of the receiver (14) is provided with a flap (20) at the inner face of which a subscriber's numbers register (18) is arranged.

14. Telephone apparatus as defined in claim 13, **characterized in that** the flap (20) is pivotally supported spaced to one narrow-side marginal edge and is released from its closed resting position by applying slight pressure to the marginal section protruding over the bearing axis.

15. Telephone apparatus as defined in claim 13 or 14, **characterized in that** the flap (20) is biased by means of a spring in opening direction.

16. Telephone apparatus as defined in one of claims 11 to 15, **characterized in that** the structural members correlated to the magnets (16) are a switch-off key for the microphone (17) and a push button (19) for the subscriber's numbers register.

17. Telephone apparatus as defined in one of claims 1 to 16, **characterized in that** a loudspeaker listening means (9) is fixed to the rotatable housing portion (2).

18. Telephone apparatus as defined in one of claims 1 to 17, **characterized in that** at the bottom face of the ground wall (23) of the housing (1) grooves (24) extending from the side edges to the central portion, for receiving the receiver cord and the telephone connection cord are formed, said cords passing through through-bores (25) in the central portion of the ground wall (23) into the interior of the housing (1), and that the cords are exchangeable in the grooves for clockwise or anticlockwise operation.

19. Telephone apparatus as defined in one of claims 1 to 18, **characterized in that** the keys (4) of the key block (3) comprise grip indentations and that the denominations of the keys (4) are disposed off indentations.

**Revendications**

1. Appareil téléphonique comportant un bloc de touches, **caractérisé en ce que** le boîtier (1) présente une section (2) du boîtier avec un plan circulaire, maintenue de manière pivotante et comportant le bloc de touches (3), et en ce que le boîtier avec la section (2) du boîtier et le bloc de touches (3) a essentiellement la forme d'une calotte sphérique.

2. Appareil téléphonique selon la revendication 1, **caractérisé en ce que** la section (2) pivotante du boîtier est arrangée de manière concentrique relatif au boîtier (1).

3. Appareil téléphonique selon l'une des revendications 1 ou 2, **caractérisé en ce que** la connexion électrique entre les éléments tenus de manière pivotante (4, 5) et une plaquette (8) à circuit imprimé, arrangée dans la région du fond du boîtier (1) est formée par des câbles flexibles.

4. Appareil téléphonique selon l'une des revendications 1 à 3, le bloc de touches ayant un plan rectangulaire, **caractérisé en ce que** le bloc de touches (3) est disposé de manière excentrique dans la section (2) pivotante du boîtier tellement que l'axe central correspondant à l'orientation des désignations des touches (4) se déroule en direction radiale de la section (2) pivotante du boîtier.

5. Appareil téléphonique selon l'une des revendications 1 à 4, **caractérisé en ce que** la section (2) pivotante du boîtier comporte de plus un affichage (5) adjacent au bloc de touches (3).

6. Appareil téléphonique selon l'une des revendications 1 à 5, **caractérisé en ce que** le bloc de touches (3) avec l'affichage (5) optique est insére détachablement dans la section (2) pivotante du boîtier.

7. Appareil téléphonique selon l'une des revendications 1 à 6, **caractérisé en ce que** la section (2) du boîtier est pivotante de 210°, la capacité de rotation étant limitée par arrêts.

8. Appareil téléphonique selon la revendication 7, **caractérisé en ce que** la section pivotante (2) du boîtier enclenche facilement de manière détachable en pas partiels de 5° chacune.

9. Appareil téléphonique selon l'une des revendications 1 à 8, **caractérisé en ce que** le boîtier (1) a une surface rectangulaire du base et des parois latérales (1) verticales.

10. Appareil téléphonique selon la revendication 8, **caractérisé en ce que** dans la région de deux angles adjacents au boîtier (1) des dépressions (11) synclinales sont formées pour récevoir l'écouteur (12) et le microphone (13) du combiné (14).

11. Appareil téléphonique selon l'une des revendications 1 à 10, **caractérisé en ce que** la section centrale (15) du combiné (14) joignant l'écouteur (12) et le microphone (13) est courbé de manière sphérique, et en ce que la surface intérieure de la section centrale (15) est adjacente au boîtier (1).

12. Appareil téléphonique selon la revendication 11, **caractérisé en ce que** dans le boîtier (1) dans la région adjacente à la section centrale (15) de l'écouteur (14) deux aimants (16) sont prévus, et en ce que la section centrale (15) dans des positions correspondantes est fournie d'éléments (17, 19), particulièrement en matérial ferromagnétique.

13. Appareil téléphonique selon l'une des revendications 1 à 12, **caractérisé en ce que** la section centrale (15) du combiné (14) est fournie d'une trappe (20), un annuaire téléphonique (18) étant prévu à la face intérieure de celle-ci.

14. Appareil téléphonique selon la revendication

13, **caractérisé en ce que** la trappe (20) est suspendu de manière pivotante à distance d'un bord du petit côté et qu'elle est détachée de sa position fermée d'enclenchement par pression modérée sur la section du bord saillant au-delà de l'axe de palier.

15. Appareil téléphonique selon la revendication 13 ou 14, **caractérisé en ce que** la trappe (20) est commandée par un ressort dans la direction d'ouverture.

16. Appareil téléphonique selon l'une des revendications 11 à 15, **caractérisé en ce que** les éléments adjoints aux aimants (16) sont une touche (17) pour couper le microphone et un bouton-poussoir (19) pour l'annuaire téléphonique (18).

17. Appareil téléphonique selon l'une des revendications 1 à 16, **caractérisé en ce que** un haut-écouteur (9) est attaché à la section (2) pivotante du boîtier.

18. Appareil téléphonique selon l'une des revendications 1 à 17, **caractérisé en ce qu'**au revers de la paroi du fond (23) du boîtier (1) des encoches (24) allant des bords latéraux à la section centrale sont formées pour récevoir le câble d'écouteur et le câble connecteur téléphonique, les câbles allant au travers de forures de passage (25) dans la région centrale de la paroi du fond (23) à l'intérieur du boîtier (1), et en ce que le câbles dans les encoches sont interchangeables pour opération à gauche ou à doite.

19. Appareil téléphonique selon l'une des revendications 1 à 18, **caractérisé en ce que** les touches (4) du bloc des touches (3) comportent des dépressions de maniement, et en ce que les désignations des touches (4) sont arrangées en dehors des dépressions.

*Fig.1*

*Fig.2*

*Fig.3*

*Fig. 4*

*Fig. 5*

*Fig. 6*

Fig.7

EP 0 229 364 B1